# EUROPEAN PATENT APPLICATION

(11) **EP 3 493 566 A1**
(43) Date of publication of application: **05.06.2019**
(21) Application number: 18206570.6
(22) Date of filing: 15.11.2018
(51) Int. Cl.: H04W 8/00, H04W 48/20, H04W 84/18, H04W 88/04, H04W 4/70

(54) **WIRELESS NETWORK DEVICE AND ASSOCIATED WIRELESS NETWORK ACCESS METHOD**

(30) Priority: 01.12.2017 TW 10642278
(71) Applicant: Arcadyan Technology Corporation, 300 Hsinchu City (TW)
(72) Inventor: LEE, Chih-Fang, 300 Hsinchu City (TW); ZHENG, Jun, Xuhui District, Shanghai (CN)
(74) Representative: dompatent von Kreisler Selting Werner - Partnerschaft von Patent- und Rechtsanwälten mbB

(57) **Abstract**

A wireless network device and associated wireless network access method are provided. The method includes the following steps. Receive a number of beacons transmitted periodically from a number of network devices respectively, wherein each beacon contains a connection quality message corresponding to each network device. Obtain the connection quality message corresponding to each network device from each beacon. Select one of the network devices as a target network device according to the connection quality message. Establish connection to the target network device to access the wireless network.

## Description

### FIELD OF THE INVENTION

The present invention relates to wireless network technology, and more particularly, to a method for automatically accessing the wireless network adaptable for a wireless network device.

### BACKGROUND OF THE INVENTION

The requirements for bandwidth and signal coverage of wireless network have been increasing with the rapid development of network technology. Therefore, the number of access points (APs) deployed in our living environment has increased to achieve better network connection quality. For the demand for high deployment density of access points, mesh network architecture has been provided. Locations of access points may be flexibly adjusted in the mesh network. The access points can communicate with each other in a wired or wireless manner, and can access Internet through a gateway. The mesh network can expand the coverage range by incorporating new access points. Therefore, there is a need to propose a wireless network access method adaptable for a wireless network device.

### SUMMARY OF THE INVENTION

The disclosure is directed to a wireless network device and a wireless network access method applied thereto, which enables the wireless network device to automatically access a wireless network and improves the usage convenience.

According to one embodiment of the invention, a wireless network access method is provided. The method includes the following steps. Receive a number of beacons transmitted periodically from a number of network devices respectively, wherein each beacon contains a connection quality message corresponding to each network device. Obtain the connection quality message corresponding to each network device from each beacon. Select one of the network devices as a target network device according to the connection quality message corresponding to each network device. Establish connection to the target network device to access the wireless network.

According to one embodiment of the invention, a wireless network device is provided. The wireless network device includes a wireless transceiver and a control circuit. The wireless transceiver is configured to receive a number of beacons transmitted periodically from a number of network devices respectively, wherein each beacon contains a connection quality message corresponding to each network device. The control circuit is configured to obtain the connection quality message corresponding to each network device from each beacon, select one of the network devices as a target network device accordingly, and control the wireless transceiver to establish connection to the target network device to access the wireless network.

Numerous objects, features and advantages of the present invention will be readily apparent upon a reading of the following detailed description of embodiments of the present invention when taken in conjunction with the accompanying drawings. However, the drawings employed herein are for the purpose of descriptions and should not be regarded as limiting.

### BRIEF DESCRIPTION OF THE DRAWINGS

The above objects and advantages of the present invention will become more readily apparent to those ordinarily skilled in the art after reviewing the following detailed description and accompanying drawings, in which:
FIG. 1 shows a wireless network including a number of network devices according to one embodiment of the invention.
FIG. 2 shows a flowchart of a wireless network access method according to one embodiment of the invention.
FIG. 3 shows a block diagram of a wireless network device according to one embodiment of the invention.
FIG. 4 shows a flowchart of creating a list of candidate network devices according to the Internet connection capability according to one embodiment of the invention.
FIG. 5 shows a flowchart of creating a list of candidate network devices according to the group identifier according to one embodiment of the invention.
FIG. 6 shows a flowchart of selecting the target network device according to the hop count and the signal strength according to one embodiment of the invention.
FIG. 7 shows a flowchart of a method after accessing the wireless network according to one embodiment of the invention.

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

### DETAILED DESCRIPTION OF PREFERRED EMBODIMENTS

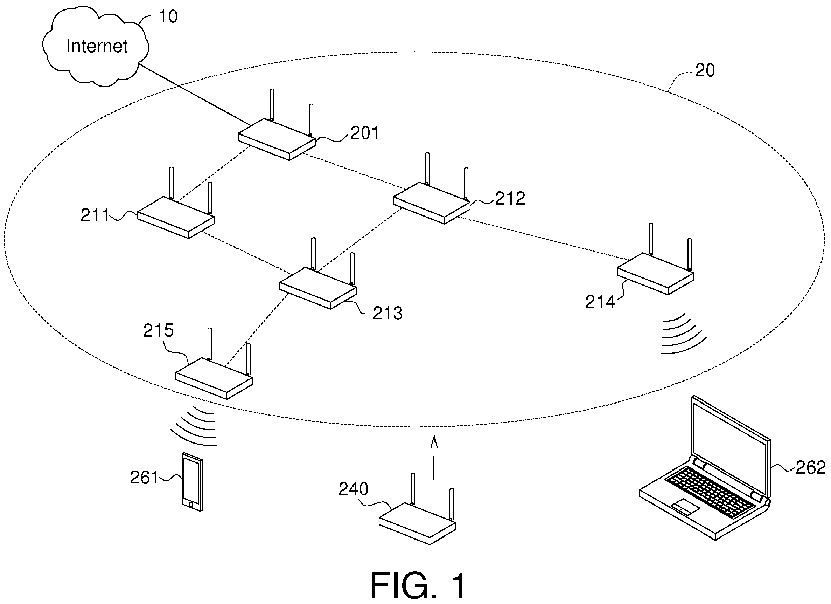

FIG. 1 shows a wireless network including a number of network devices according to one embodiment of the invention. The wireless network 20 shown in FIG. 1 is, for example, a wireless mesh network. A number of network devices 211-215 are connected to each other, and are connected to Internet 10 through a gateway 201. The network devices 211-215 may be a wireless AP, a router, a base station, or a repeater. The network devices 211-215 may have wireless network interface and wired network interface. The wireless network interface may, for example, include Wi-Fi transceiver antennas, which use 802.11 a/b/n/ac standards for wireless signal transmission. The wired network interface may, for example, include Ethernet ports. The network devices 211-215 may be connected to each other through network cables, power line communication (PLC), or a wireless network. In the following description, the network devices 211-215 connected through the Wi-Fi signal will be used as an example. The network devices 211-215 may constitute a wireless local area network. However, the invention is not limited to the Wi-Fi wireless network, and the number of network devices in the wireless network 20 is not limited to five.

The mesh network formed by the number of network devices 211-215 effectively expands the service area of the wireless network 20. For example, the user equipment 261 (e.g. a cellphone) may be connected to a nearby network device 215, and the user equipment 262 (e.g. a laptop computer) may be connected to a nearby network device 214. A new wireless network device 240 may be incorporated into the wireless network 20 to further expand the coverage area of the wireless network 20. The wireless network device 240 may be the same device as the network devices 211-215. In the following description, the wireless network device 240 will be used as the device that is going to access the wireless network 20, so as to be distinguished from the network devices 211-215 already existing in the wireless network 20.

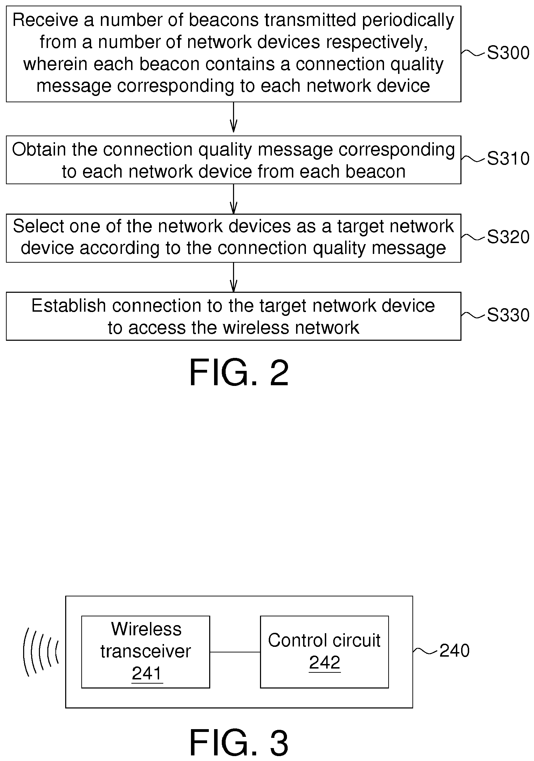

FIG. 2 shows a flowchart of a wireless network access method according to one embodiment of the invention. The method includes the following steps. Step S300: Receive a number of beacons transmitted periodically from a number of network devices 211-215 respectively, wherein each beacon contains a connection quality message corresponding to each network device 211-215. Step S310: Obtain the connection quality message corresponding to each network device 211-215 from each beacon. Step S320: Select one of the network devices 211-215 as a target network device according to the connection quality message. Step S330: Establish connection to the target network device to access the wireless network 20. The operation of each step will be described in accompany with a device diagram shown in FIG. 3.

FIG. 3 shows a block diagram of a wireless network device according to one embodiment of the invention. The wireless network device 240 includes a wireless transceiver 241 and a control circuit 242. The wireless transceiver 241 is configured to receive a number of beacons transmitted periodically from a number of network devices 211-215 respectively, wherein each beacon contains a connection quality message corresponding to each network device 211-215. The control circuit 242 is configured to obtain the connection quality message corresponding to each network device 211-215 from each beacon, select one of the network devices 211-215 as a target network device accordingly, and control the wireless transceiver 241 to establish connection to the target network device to access the wireless network 20. The wireless transceiver 241, for example, includes transmitting antenna and receiving antenna capable of wireless signal transmission. The control circuit 242 may be a microprocessor or a microcontroller, which may perform the above functions by executing a software program or a firmware. The control circuit 242 may also be implemented as an application specific integrated circuit (ASIC), which realizes the above functions by a hardware circuit.

The step S300 may be performed by the wireless transceiver 241. The steps S310, S320, S330 may be performed by the control circuit 242. The network devices 211-215 may broadcast beacons periodically. For example, in a Wi-Fi environment, a beacon may be broadcasted every 100ms. The beacon may make other network devices or user equipment that have not yet established connection learn the service set identifier (SSID) of the network devices 211-215. The network devices 211-215 may use the same SSID. Before wireless network device 240 establishes connection to any of the network devices 211-215, the wireless transceiver 241 may receive a number of beacons from the network devices 211-215. The network device 211-215 may contain its own connection quality message in the beacons, such that the wireless network device 240 may obtain the connection quality message of each network device 211-215 (step S310) before the wireless network device 240 accesses the wireless network 20.

The connection quality message is, for example, related to whether there is Internet connection capability, the data transmission rate, the hop count from the gateway, and other parameters related to the connection quality. Next in step S320, the control circuit 242 may select a target network device to establish connection according to the connection quality message of each network device 211-215. For example, the network device having the best connection quality is selected as the target network device. In step S330, the control circuit 242 may control the wireless transceiver 241 to establish connection to the target network device, such as establishing Wi-Fi connection to the target network device using 5GHz high band, 5GHz low band, or 2.4GHz band.

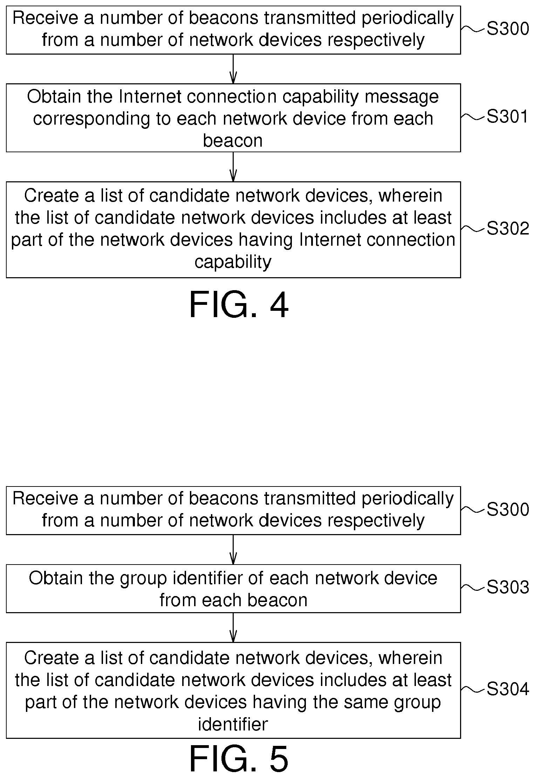

FIG. 4 shows a flowchart of creating a list of candidate network devices according to the Internet connection capability according to one embodiment of the invention. In this embodiment, the beacon contains the Internet connection capability message corresponding to the network device, indicating whether the network device is able to access Internet successfully. Steps S301 and S302 may further be included between step S300 and step S310 shown in FIG. 2. Step S301: the control circuit 242 may obtain the Internet connection capability message corresponding to each network device 211-215 from each beacon. For example, assume the network device 211 does not have Internet connection capability, while the network devices 212-215 have Internet connection capability. Step S302: the control circuit 242 may create a list of candidate network devices. This list of candidate network devices includes network devices having Internet connection capability, which are the network devices 212-215 in this example. Next, when the step S310 is executed, the target network device may be selected from the list of candidate network devices obtained in the step S302. The method shown in FIG. 4 can filter out network devices that do not have Internet connection capability when selecting the target network device.

FIG. 5 shows a flowchart of creating a list of candidate network devices according to the group identifier according to one embodiment of the invention. In this embodiment, the beacon contains a group identifier (group ID) of the network device. The group identifier may be used to identify the group that the network device belongs to. For example, network devices that are shipped by the same manufacturer in the same batch may have the same group identifier, or network devices having the same model number may have the same group identifier. In addition, in one embodiment, the user may perform synchronous setup on the devices such that a number of devices can have the same group identifier. Steps S303 and S304 may further be included between the step S300 and step S310 shown in FIG. 2. Step S303: the control circuit 242 may obtain the group identifier of each network device 211-215 from each beacon. Step S304: the control circuit 242 may create a list of candidate network devices. This list of candidate network devices includes network devices having the same group identifier. Next, when the step S310 is executed, the target network device may be selected from the list of candidate network devices obtained in the step S304. The method shown in FIG. 5 can filter out network devices that have different group identifiers when selecting the target network device.

In one embodiment, the wireless network access method may include steps S301 and S302 shown in FIG. 4 and steps S303 and S304 shown in FIG. 5. For example, steps S300, S301, S302, S303, and S304 may be executed in order. As such, in the process of determining the target network device, network devices that do not have Internet connection capability and network devices that have different group identifiers can be filtered out.

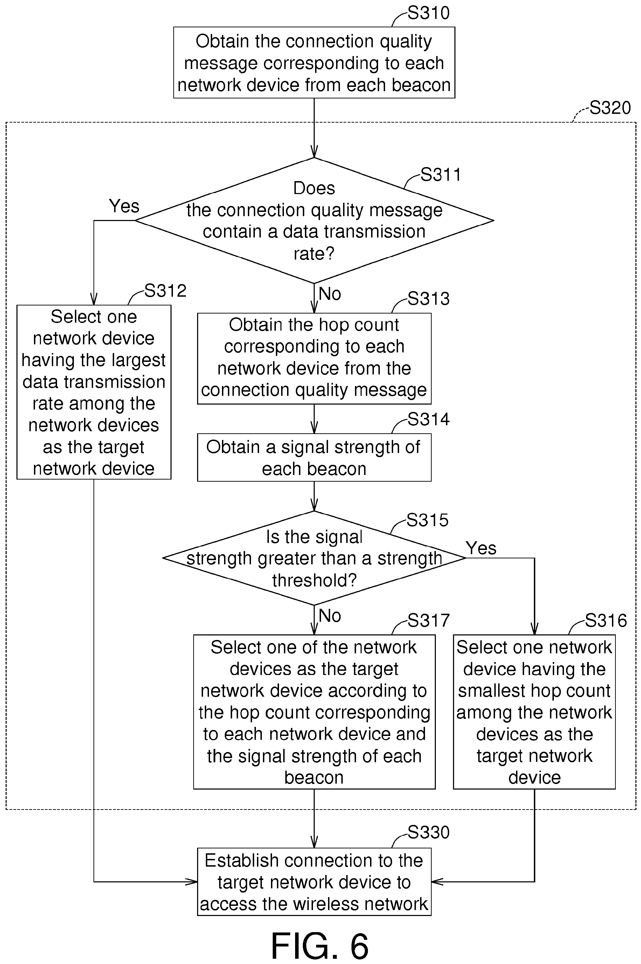

FIG. 6 shows a flowchart of selecting the target network device according to the hop count and the signal strength according to one embodiment of the invention. FIG. 6 shows an example of the step S320 shown in FIG. 2. Step S311: determine whether the connection quality message contains a data transmission rate. The data transmission rate may be obtained if the network device has performed a speed test. For example, the network device 215 has performed a speed test to obtain an uplink data transmission rate from the network device 215 to the gateway 201, and the network device 215 contains the uplink data transmission rate in the beacon broadcasted by the network device 215.

If the determination result of step S311 is true, proceed to step S312: select one network device having the largest data transmission rate among the network devices as the target network device based on the beacons received from the network devices. Step S330 for establishing connection may then be performed afterwards. If the determination result of step S311 is false, proceed to step S313: obtain a hop count corresponding to each network device from the connection quality message. The hop count may represent how many nodes through which the network device is connected to the gateway 201. Referring to the example shown in FIG. 1, the hop count of the gateway 201 may be defined as 0, the hop counts of the network device 211 and the network device 212 are 1, the hop counts of the network device 213 and the network device 214 are 2, and the hop count of the network device 215 is 3. Each network device 211-215 may contain the hop count in the connection quality message in its own broadcasting beacon. In a wireless network environment, the hop count may be related to the connection quality. For example, a network device having a lower hop count may be closer to the gateway 201, and may have better wireless network connection capability.

The control circuit 242 may obtain the signal strength of the beacon in step S314. Specifically, the wireless network device 240 may measure the signal strength of the beacon itself when the wireless transceiver 241 receives the beacon. For example, the signal strength may be calculated by the received signal strength indicator (RSSI). The beacon itself broadcasted by the network device 211-215 does not contain the signal strength, since the signal strength is related to the transmission channel. In other words, the signal strength of the beacon is related to the location where the device receiving the beacon is. The control circuit 242 may select the target network device according to the hop count obtained in step S313 and the signal strength obtained in step S314.

One embodiment regarding the selection of the target network device based on the hop count and the signal strength may be referred to FIG. 6. Step S315 involves determining whether the signal strength (e.g. RSSI) is greater than a strength threshold, which may be an indicator for a good connection quality. If the determination result of step S315 is true, proceed to step S316 to select one network device having the smallest hop count among the network devices that meet the strength threshold condition as the target network device. If the determination result of step S315 is false, proceed to step S317 to select the target network device according to the hop count and the signal strength. The execution of step S317 may depend on a selection rule related to the hop count and the signal strength. The selection rule may be a function operation set by the control circuit 242 or a lookup table stored in the control circuit 242. After the target network device is determined in step S316 or step S317, step S330 may be performed to establish connection.

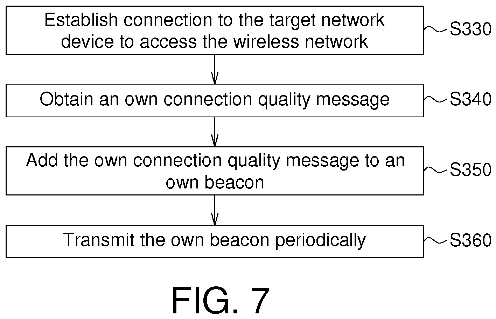

In one embodiment, after the wireless network device 240 accesses the wireless network 20, the wireless network device 240 may update its own broadcasting beacon, such that other devices may receive the beacon having the connection quality message transmitted by the wireless network device 240 when accessing the wireless network 20 in subsequent operations. FIG. 7 shows a flowchart of a method after accessing the wireless network according to one embodiment of the invention. Steps S340, S350, S360 may be performed after step S330. Step S340: obtain an own connection quality. Step S350: add the connection quality message to an own beacon. Step S360: transmit the own beacon periodically. Steps S340 and S350 may be performed by the control circuit 242, and step S360 may be performed by the wireless transceiver 241.

The wireless network device 240 may possess both wireless network interface and wired network interface. In one embodiment, the wireless network device 240 may be connected to one of the network devices 211-215 through Ethernet. A network device that is nearest to the wireless network device 240 may be selected for connection if wired connection is used. Steps shown in FIG. 7 may be performed by the wireless network device 240 no matter whether the wireless network device 240 is connected to network devices 211-215 through a wired or wireless channel (such as executing the method shown in FIG. 2), so as to update the own beacon broadcasted by the wireless network device 240.

The own connection quality message obtained in step S340 may include the hop count corresponding to the wireless network device 240. For example, if the wireless network device 240 is connected to the network device 214 through a wired channel (e.g. Ethernet), the hop count of the wireless network device 240 is the same as the hop count of the network device 214. The hop count of the wireless network device 240 in this example is 2. If the wireless network device 240 is connected to the network device 214 through a wireless channel (e.g. Wi-Fi), the hop count of the wireless network device 240 is one more than the hop count of the network device 214. The hop count of the wireless network device 240 in this example is 3.

In one embodiment, step S340 may include a speed test to test the data transmission rate between the wireless network device 240 and the gateway 201. The own connection quality message includes the data transmission rate between the wireless network device 240 and the gateway 201. In step S350, the own connection quality message having the data transmission rate is then added to the own beacon.

In one embodiment, the own beacon contains one of the followings: the Internet connection capability message (which may be obtained by testing Internet connection), the group identifier, and the media access control (MAC) address of the parent node. The parent node is, for example, the first node that the wireless network device 240 passes on the path connected to the gateway 201. Based on the flowchart shown in FIG. 2, the parent node of the wireless network device 240 may be the target network device selected by the wireless network device 240 for accessing the wireless network 20. By containing the MAC address of the parent node in the own beacon, in subsequent operations, other devices may receive the MAC address of the parent node from the own beacon broadcasted by the wireless network device 240 when accessing the wireless network 20, so as to determine how to access the wireless network 20 accordingly.

The flowchart shown in FIG. 4 to FIG. 7 may be optionally performed individually, or may be performed together in part or in whole. For example, the steps shown in FIG. 4 and FIG. 5 may be optionally performed after step S300, the steps shown in FIG. 6 may be optionally performed after step S310, and the steps shown in FIG. 7 may be optionally performed after step S330.

According to the wireless network access method and the wireless network device described in the above embodiments, each network device 211-215 contains its connection quality message in its transmitting beacon, such that the wireless network device 240 can automatically select a target device for connection according to the received beacons. Therefore, the user does not have to enter the user interface of the wireless network device 240 to setup manually. The wireless network device 240 can access the wireless network 20 quickly and conveniently. The usage convenience is improved and the expandability for building wireless network environments is also enhanced. In addition, the wireless network device 240 can contain its own connection quality message in its own beacon after accessing the wireless network 20, so as to facilitate more network devices to be incorporated into the wireless network 20.

While the invention has been described in terms of what is presently considered to be the most practical and preferred embodiments, it is to be understood that the invention needs not be limited to the disclosed embodiment. On the contrary, it is intended to cover various modifications and similar arrangements included within the spirit and scope of the appended claims which are to be accorded with the broadest interpretation so as to encompass all such modifications and similar structures.

## Claims

1. A wireless network access method adaptable for a wireless network device (240), **characterized in that** the wireless network access method comprises:
(S300) receiving a plurality of beacons transmitted periodically from a plurality of network devices respectively, wherein each of said plurality of beacons contains a connection quality message corresponding to each of said plurality of network devices;
(S310) obtaining said connection quality message from each of said plurality of beacons;
(S314) obtaining a signal strength of each of said plurality of beacons;
(S320) selecting a target network device from one of said plurality of network devices, which has said signal strength greater than a strength threshold, according to said connection quality message;
(S330) establishing a connection with said target network device;
(S340) establishing an own connection quality message;
(S350) adding said own connection quality message to an own beacon; and
(S360) transmitting said own beacon periodically.

2. The wireless network access method of claim 1, further comprising:
(S301) obtaining an Internet connection capability message from each of said plurality of beacons; and
(S302) creating a list of candidate network devices, wherein said list of candidate network devices comprises at least part of said plurality of network devices having Internet connection capability;
wherein the step of selecting said target network device comprises:
selecting said target network device from said list of candidate network devices, according to said connection quality message.

3. The wireless network access method of claim 1 or 2, further comprising:
(S303) obtaining a group identifier of each of said plurality of network devices from each of said plurality of beacons; and
(S304) creating a list of candidate network devices, wherein said list of candidate network devices comprises at least part of said plurality of network devices having the same group identifier;
wherein the step of selecting said target network device comprises:
selecting said target network device from said list of candidate network devices, according to said connection quality message.

4. The wireless network access method of any one of claims 1 to 3, wherein the step of selecting said target network device comprises:
(S312) when said connection quality message containing a data transmission rate, selecting said target network device from one of said plurality of network devices, having the largest data transmission rate among said plurality of network devices.

5. The wireless network access method of any one of claims 1 to 4, wherein the step of selecting said target network device comprises:
(S313) when said connection quality message does not contain a data transmission rate, obtaining a hop count corresponding to each said plurality of network devices from said connection quality message; and
(S317) selecting said target network device from one of said plurality of network devices, according to said hop count and said signal strength.

6. The wireless network access method of claim 5, wherein the step of selecting said target network device further comprises:
(S316) selecting said target network device from one of said plurality of network devices, having the smallest hop count among said plurality of network devices.

7. The wireless network access method of any one of claims 1 to 6, further comprising:
testing a data transmission rate between each of said plurality of network devices and a gateway;
wherein said connection quality message further comprises said data transmission rate.

8. The wireless network access method of any one of claims 1 to 7, wherein said own beacon contains at least one of the followings: an Internet connection capability message, a group identifier, and a media access control (MAC) address of a parent node.

9. A wireless network device (240), **characterized in that** the wireless network device comprises:
a wireless transceiver (241) configured to (S300) receive a plurality of beacons transmitted periodically from a plurality of network devices respectively, wherein each of said plurality of beacons contains a connection quality message corresponding to each of said plurality of network devices; and
a control circuit (242) configured to (S310) obtain said connection quality message from each of said plurality of beacons, (S314) obtain a signal strength of each of said plurality of beacons, (S320) select a target network device from one of said plurality of network devices, which has said signal strength greater than a strength threshold, according to said connection quality message, (S330) establish a connection with said target network device, (S340) establish an own connection quality message, and (S350) add said own connection quality message to an own beacon;
wherein the wireless transceiver (241) is further configured to (S360) transmit said own beacon periodically.

10. The wireless network device of claim 9, wherein the control circuit is further configured to:
(S301) obtain an Internet connection capability message from each of said plurality of beacons; and
(S302) create a list of candidate network devices, wherein said list of candidate network devices comprises at least part of said plurality of network devices having Internet connection capability;
wherein the control circuit is further configured to select said target network device from said list of candidate network devices, according to said connection quality message.

11. The wireless network device of claims 9 or 10, wherein the control circuit is further configured to:
(S303) obtain a group identifier of each of said plurality of network devices from each of said plurality of beacons; and
(S304) create a list of candidate network devices, wherein said list of candidate network devices comprises at least part of said plurality of network devices having the same group identifier;
wherein the control circuit is further configured to select said target network device from said list of candidate network devices, according to said connection quality message.

12. The wireless network device of any one of claims 9 to 11, wherein the control circuit is further configured to:
(S312) when said connection quality message containing a data transmission rate, select said target network device from one of said plurality of network devices, having the largest data transmission rate among said plurality of network devices.

13. The wireless network device of any one of claims 9 to 12, wherein the control circuit is further configured to:
(S313) when said connection quality message does not contain a data transmission rate, obtain a hop count corresponding to each said plurality of network devices from said connection quality message; and
(S317) select said target network device from one of said plurality of network devices, according to said hop count and said signal strength.
wherein the control circuit is further configured to (S316) select said target network device from one of said plurality of network devices, having the smallest hop count among said plurality of network devices.

14. The wireless network device of any one of claims 9 to 13, wherein the control circuit is further configured to:
test a data transmission rate between each of said plurality of network devices and a gateway;
wherein said connection quality message further comprises said data transmission rate.

15. The wireless network device of any one of claims 9 to 14, wherein said own beacon contains at least one of the followings: an Internet connection capability message, a group identifier, and a media access control (MAC) address of a parent node.
